# EUROPÄISCHE PATENTANMELDUNG

(11) **EP 4 338 588 A1**
(43) Veröffentlichungstag der Anmeldung: **20.03.2024**
(21) Anmeldenummer: 23196879.3
(22) Anmeldetag: 12.09.2023
(51) Int. Cl.: A01K 5/00

(54) **VERFAHREN ZUR STEUERUNG EINES GETRIEBES SOWIE FUTTERMISCHWAGEN**

(30) Priorität: 13.09.2022 DE 102022123345
(71) Anmelder: Mayer Verwaltungs GmbH & Co. KG, 84529 Tittmoning (DE)
(72) Erfinder: Felber, Johann, 84529 Tittoming (DE)
(74) Vertreter: Flach Bauer & Partner Patentanwälte mbB

(57) **Zusammenfassung**

Ein Verfahren zur Steuerung eines Getriebes (28) eines Futtermischwagens (12) ist gezeigt. Der Futtermischwagen (12) hat das Getriebe (28), einen Futterbehälter (24), wenigstens ein im Futterbehälter (24) angeordnetes Mischwerkzeug (26) und eine Steuereinheit (30). Das Verfahren umfasst die folgenden Schritte:
- Bestimmen der aktuell in den Futterbehälter (24) geladenen Futterkomponente durch die Steuereinheit (30) oder Erkennen eines aktuell durchgeführten Austragsvorgangs,
- Auswählen der Zieldrehzahl des Getriebes (28) anhand der in den Futterbehälter (24) geladenen Komponenten oder anhand der Durchführung des Austragsvorgangs durch die Steuereinheit (30), und
- Steuern des Übersetzungsverhältnisses des Getriebes (28), sodass die Ausgangsdrehzahl der ausgewählten Zieldrehzahl entspricht.

Ferner sind ein Futtermischwagen (12) und ein System (10) gezeigt.

## Beschreibung

Die Erfindung betrifft ein Verfahren zur Steuerung eines Getriebes eines Futtermischwagens, einen Futtermischwagen sowie ein System mit einem Futtermischwagen.

Futtermischwägen zur Bereitstellung von Futterrationen auf der Basis von unterschiedlichen Futterkomponenten sind bekannt. Beim Befüllen des Futterbehälters des Futtermischwagens werden verschiedene Futterkomponenten nacheinander in den Futtermischwagen eingeführt und dort mittels eines Mischwerkzeugs vermischt.

Aufgrund der Verschiedenartigkeit der verschiedenen Futterkomponenten, insbesondere der unterschiedlichen Faserlängen bei Silagen, Stroh oder Kraftfutter, ist eine richtige und homogene Durchmischung der verschiedenen Futterkomponenten schwierig. Zwar ist es bekannt, die Drehzahl des Mischwerkzeugs in verschiedenen Stufen zu betreiben, jedoch erfolgt eine Umstellung der Drehzahl durch den Benutzer manuell.

Es ist daher Aufgabe der Erfindung, ein Verfahren zur Steuerung eines Getriebes eines Futtermischwagens einen Futtermischwagen sowie ein System bereitzustellen, bei dem auf einfache Weise eine optimale Durchmischung der verschiedenen Futterkomponenten erreicht wird.

Die Aufgabe wird gelöst durch ein Verfahren zur Steuerung eines Getriebes eines Futtermischwagens, wobei der Futtermischwagen das Getriebe, einen Futterbehälter, wenigstens ein im Futterbehälter angeordnetes Mischwerkzeug und eine Steuereinheit aufweist. Das Verfahren hat die folgenden Schritte:
- Bestimmen der aktuell in den Futterbehälter geladenen Futterkomponente durch die Steuereinheit oder Erkennen eines aktuell durchgeführten Austragsvorgangs,
- Auswählen der Zieldrehzahl des Getriebes anhand der in den Futterbehälter geladenen Komponenten oder anhand der Durchführung des Austragsvorgangs durch die Steuereinheit, und
- Steuern des Übersetzungsverhältnisses des Getriebes, sodass die Ausgangsdrehzahl der ausgewählten Zieldrehzahl entspricht.

Im Rahmen dieser Offenbarung werden zur Vereinfachung generell die Begriffe "Übersetzung" und "Übersetzungsverhältnis" verwendet anstelle von "Unter- bzw. Übersetzung" oder "Unter- bzw. Übersetzungsverhältnis". Unter "Übersetzung" und "Übersetzungsverhältnis" sind somit auch "Untersetzung" bzw. "Untersetzungsverhältnis" zu verstehen.

Durch das automatisierte anpassen der Ausgangsdrehzahl an die aktuell in den Futtermischwagen eingefüllte Futterkomponente wird der Benutzer des Futtermischwagens zum einen entlastet und zum anderen wird gewährleistet, dass das im Futterbehälter befindliche Futter optimal durchmischt wird.

Das Mischwerkzeug wird insbesondere mittels des Getriebes angetrieben. Das Mischwerkzeug kann eine Mischschnecke sein.

Die Zieldrehzahl bzw. die Mischdrehzahl für einen Austragsvorgang insbesondere für einen manuell aktivierten Austragsvorgang kann in der Steuereinheit hinterlegt sein.

In einer Ausgestaltung erhält die Steuereinheit ein Rezept, wobei in dem Rezept die in den Futterbehälter zu ladenden Futterkomponenten und/oder Informationen zum Austragsvorgang vorgegeben sind. Mittels des Rezeptes können sehr spezifische Ladevorgänge einfach und zuverlässig durchgeführt werden.

Beispielsweise umfasst das Rezept eine oder mehrere der folgenden Angaben:
- eine Zieldrehzahl und/oder eine Mischdrehzahl des wenigstens einen Mischwerkzeugs für eine zu ladende Futterkomponente,
- eine Zieldrehzahl und/oder eine Mischdrehzahl für den Austragsvorgang zum Austragen der im Futterbehälter vermischten Futterkomponenten,
- einen vorbestimmten Ablauf hintereinander zu ladender Futterkomponenten und einen vorbestimmten Ablauf an Zieldrehzahlen und/oder Mischdrehzahlen, der mit dem vorbestimmten Ablauf hintereinander zu ladender Futterkomponenten korrespondiert, oder
- eine Zieldrehzahl und/oder eine Mischdrehzahl sowie optional eine Zeitdauer für einen Weitermischlauf.

Auf diese Weise können der Steuereinheit detaillierte Informationen übergeben werden. Das Rezept kann auch als Entladeprogramm angesehen werden, wenn im Rezept Informationen zum Austragsvorgang enthalten sind.

Zum Beispiel wird das Mischwerkzeug nach Ablauf der Zeitdauer des Weitermischlaufs gestoppt.

Um das Getriebe spezifisch anzusteuern, kann die Steuereinheit die Zieldrehzahl des Getriebes mithilfe von in der Steuereinheit hinterlegten Daten sowie anhand der im Rezept angegebenen Futterkomponente und/oder der angegebenen Mischdrehzahl auswählen.

Die hinterlegten Daten können Umrechnungswerte zwischen einer angegebenen Mischdrehzahl und der Zieldrehzahl sein und/oder eine Zuordnung einer Mischdrehzahl bzw. einer Zieldrehzahl zu verschiedenen Futterkomponenten.

Um verschiedene Arten zur Mischung der Futterkomponenten bereitzustellen, kann die Zieldrehzahl eine konstante Ausgangsdrehzahl oder einen Verlauf einer variablen Ausgangsdrehzahl angeben und/oder die Mischdrehzahl kann eine konstante Drehzahl des Mischwerkzeugs oder einen Verlauf einer variablen Drehzahl des Mischwerkzeugs angeben.

Der Verlauf kann zeitlich sein oder abhängig von der Füllmenge bzw. dem Gewicht der einzelnen Futterkomponenten.

Zur Erleichterung der Eingabe von Rezepten kann die Steuereinheit das Rezept durch eine Eingabe des Benutzers am Futtermischwagen erhalten und/oder durch eine Kommunikationsverbindung von einem Füll- und/oder Zugfahrzeug des Futtermischwagens, von einem Steuerungsserver und/oder von einem Benutzerendgerät erhalten.

Die Kommunikationsverbindung kann per Wechselmedien, wie USB-Massenspeicher, per Kabel oder mittels Funktechniken, wie Bluetooth oder WLAN, erfolgen.

Das Füll- und Zugfahrzeug ist zum Beispiel ein Traktor, wobei insbesondere zwei Traktoren zum Einsatz kommen.

Das Benutzerendgerät ist beispielsweise ein PC, ein Laptop, ein Tablet oder ein Smartphone, insbesondere mit einer Fütterungsapplikation (Feeding Management).

In einer Ausführungsform wird die in den Futterbehälter geladene Futterkomponente oder das Durchführen eines Austragsvorgangs bestimmt anhand:
- des Standorts des Futtermischwagens,
- einer Eingabe des Benutzers an einem Eingabemittel des Futtermischwagens,
- das Betätigen einer Aufnahmevorrichtung des Futtermischwagens, und/oder
- des Gewichtes aller bereits in den Futterbehälter eingefüllten Futterkomponenten.

Auf diese Weise ist eine einfache und zuverlässige Erkennung der aktuell befüllten Futterkomponente möglich.

Die Gewichte sind zum Beispiel im Rezept vorgegeben.

Der Standort kann von der Steuereinheit mithilfe eines Empfängers eines globalen Navigationssatellitensystems (GNSS-Empfänger) ermittelt werden.

Um die Qualität der Mischung weiter zu verbessern können die Mischdrehzahl, die Zieldrehzahl und/oder die Ausgangsdrehzahl in Abhängigkeit von Zeitintervallen, vom Standort des Futtermischwagens, von der Trockenmasse der Futterkomponenten, von der Homogenität der Mischung der im Futterbehälter befindlichen Futterkomponenten, von der Füllstandhöhe im Futterbehälter, von der Getriebeöltemperatur des Getriebes und/oder von Betriebsdaten eines Füll- und/oder Zugfahrzeugs für den Futtermischwagen bestimmt werden.

In einer Ausgestaltung kann die Steuereinheit Betriebsdaten, insbesondere die Fahrgeschwindigkeit eines Füll- und/oder Zugfahrzeugs für den Futtermischwagen steuern, um vor dem Austragen eine vollständige Vermischung zu gewährleisten.

Der Zugriff auf Betriebsdaten erfolgt zum Beispiel mittels der TIM (Tractor Implement Management) Schnittstelle.

In einer Ausführungsform ist das Getriebe ein stufenloses Getriebe, insbesondere wobei das Getriebe ein hydromechanisches Getriebe ist und/oder ein Planetengetriebe aufweist. Mittels des stufenlosen Getriebes kann die Drehzahl des Mischwerkzeugs sehr genau an die Anforderungen der jeweiligen Futterkomponente angepasst werden, wodurch die Qualität weiter steigt.

Die Aufgabe wird ferner gelöst durch einen Futtermischwagen mit einem Futterbehälter, wenigstens einem im Futterbehälter angeordneten Mischwerkzeug, einem Getriebe zum Antrieb des Mischwerkzeugs sowie einer Steuereinheit, wobei der Futtermischwagen, insbesondere die Steuereinheit dazu eingerichtet ist, ein Verfahren wie zuvor beschrieben auszuführen.

Die zum Verfahren beschriebenen Vorteile und Merkmale gelten gleichermaßen für den Futtermischwagen und umgekehrt. Insbesondere sind die Teile des Futtermischwagens, die im Verfahren einen Schritt ausführen, auch dazu eingerichtet, diesen Schritt auszuführen.

Zur weiteren Vereinfachung kann der Futtermischwagen ein Aufnahmewerkzeug für Futter, insbesondere eine Entnahmefräse, ein Eingabemittel, einen GNSS-Empfänger und/oder eine Wiegevorrichtung aufweisen.

Ferner wird die Aufgabe gelöst durch ein System mit einem Futtermischwagen wie zuvor beschrieben sowie einem Füll- und/oder Zugfahrzeug für den Futtermischwagen, einem Steuerungsserver und/oder einem Benutzerendgerät, wobei der Futtermischwagen, insbesondere die Steuereinheit, in Kommunikationsverbindung mit dem Füll- und/oder Zugfahrzeug, dem Steuerungsserver bzw. dem Benutzerendgerät steht, und wobei das System dazu eingerichtet ist, ein zuvor beschriebenes Verfahren auszuführen.

Die zum Verfahren und/oder Futtermischwagen beschriebenen Vorteile und Merkmale gelten gleichermaßen für das System und umgekehrt. Insbesondere sind die Teile des Systems, die im Verfahren einen Schritt ausführen, auch dazu eingerichtet, diesen Schritt auszuführen.

Weitere Merkmale und Vorteile der Erfindung ergeben sich aus der nachfolgenden Beschreibung sowie aus den beigefügten Zeichnungen. In den Zeichnungen zeigen:
- Figur 1: ein erfindungsgemäßes System mit einem erfindungsgemäßen Futtermischwagen in schematischer Darstellung,
- Figur 2: eine Darstellung eines Rezeptes als Diagramm der Drehzahl des Mischwerkzeugs des Futtermischwagens gemäß Figur 1 in einem beispielhaften zeitlichen Ablauf bei der Durchführung eines erfindungsgemäßen Verfahrens,
- Figur 3: ein schematisches Ablaufdiagramm eines erfindungsgemäßen Verfahrens, und
- Figur 4: eine zweite Ausführungsform eines erfindungsgemäßen Systems mit einem erfindungsgemäßen Futtermischwagen.

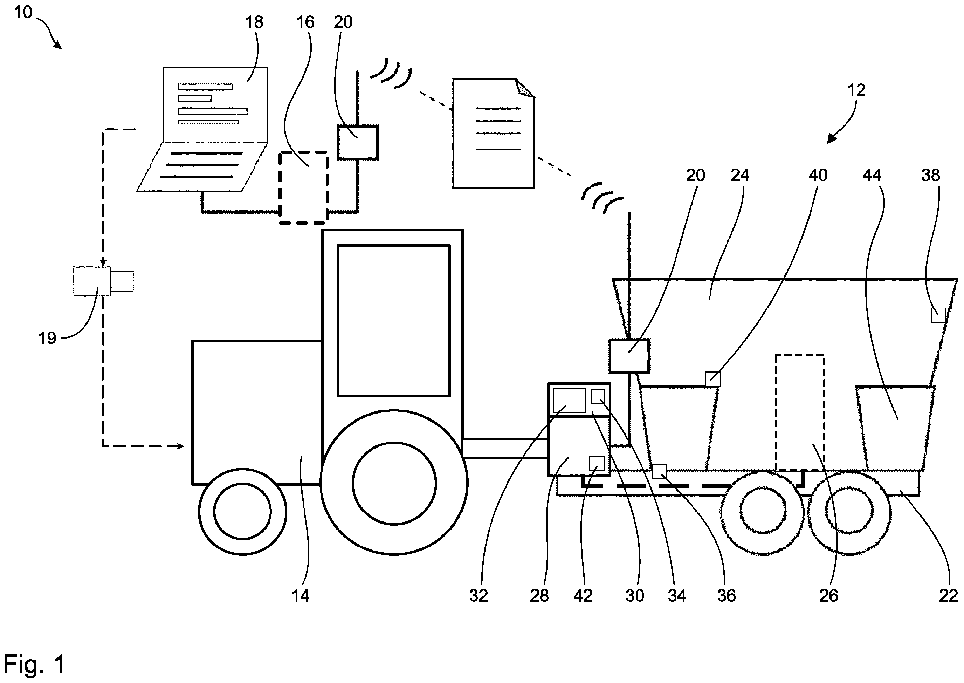

Figur 1 zeigt schematisch ein System 10 mit einem Futtermischwagen 12 sowie einem oder mehreren von einem Füll- und/oder Zugfahrzeug 14, einem Steuerungsserver 16 oder einem Benutzerendgerät 18.

Das Füll- und/oder Zugfahrzeug 14 ist im gezeigten Ausführungsbeispiel ein Traktor, von dem der Futtermischwagen 12 gezogen werden kann. Zudem kann das Füll- und/oder Zugfahrzeug 14 eine Ladeschaufel aufweisen, um Futterkomponenten in den Futtermischwagen 12 einzufüllen.

Das Benutzerendgerät 18 ist im gezeigten Ausführungsbeispiel ein Laptop, kann jedoch ebenfalls ein PC, ein Tablet oder ein Smartphone sein. Auf dem Benutzerendgerät 18 läuft eine Fütterungsapplikation (Feeding Management), die zur Erstellung von Rezepten und zur Übermittlung der Rezepte an den Futtermischwagen 12 dient.

Das Füll- und/oder Zugfahrzeug 14, der Steuerungsserver 16 und/oder das Benutzerendgerät 18 unterhalten eine Kommunikationsverbindung mit dem Futtermischwagen 12. Die Kommunikationsverbindung kann kabelgebunden erfolgen, wie dargestellt über bekannte Funktechniken, wie Bluetooth oder WLAN, aber auch über Wechselmedien, wie einen USB-Wechseldatenträger 19, der an die verschiedenen Geräte angesteckt wird.

Die Kommunikationsverbindung zwischen Futtermischwagen und dem Füll- und/oder Zugfahrzeug 14 erfolgt beispielsweise mittels des bekannten TIM (Traktor Implement Management).

Für die Kommunikationsverbindung weist der Futtermischwagen 12 ein entsprechendes Kommunikationsmodul 20 auf und auch der Steuerungsserver 16 bzw. das Benutzerendgerät 18 ist mit einem entsprechenden Kommunikationsmodul 20 ausgestattet oder verbunden.

Der Futtermischwagen 12 ist im gezeigten Ausführungsbeispiel ein gezogener Futtermischwagen 12 und weist ein Fahrgestell 22, einen Futterbehälter 24, ein Mischwerkzeug 26, ein Getriebe 28 sowie eine Steuereinheit 30 auf.

Der Futterbehälter 24 ist auf dem Fahrgestell 22 befestigt und nach oben hin geöffnet, um Futterkomponenten in den Futterbehälter 24 einzufüllen.

Das Mischwerkzeug 26 ist innerhalb des Futterbehälters 24 angeordnet und beispielsweise eine Mischschnecke.

Im gezeigten Ausführungsbeispiel ist lediglich ein Mischwerkzeug 26 vorgesehen. Denkbar ist jedoch auch, dass zwei, drei oder sogar mehr Mischwerkzeuge 26 im Futterbehälter 24 vorgesehen sind.

Das Mischwerkzeug 26 ist drehbar im Futterbehälter 24 gelagert und wird mittels des Getriebes 28 angetrieben. Hierzu ist das Mischwerkzeug 26 mit einer Ausgangswelle des Getriebes 28 verbunden.

Die Eingangswelle des Getriebes 28 ist mit dem Füll- und/oder Zugfahrzeug 14 verbunden, insbesondere mit dem Nebenabtrieb des Füll- und/oder Zugfahrzeugs 14.

Das Füll- und/oder Zugfahrzeug 14 treibt somit das Mischwerkzeug 26 an und zwar über das Getriebe 28.

Das Getriebe 28 stellt eine Übersetzung gemäß einem Übersetzungsverhältnis bereit, um eine gewünschte Ausgangsdrehzahl am Getriebe 28 und somit eine gewünschte Drehzahl des Mischwerkzeug 26 bereitzustellen.

Das Getriebe 28 ist ein stufenloses Getriebe, das als hydromechanisches Getriebe ausgeführt ist. Das Getriebe 28 kann ein Planetengetriebe aufweisen.

Die Steuereinheit 30 ist mit dem Kommunikationsmodul 20 verbunden und somit im Datenaustausch mit dem Füll- und/oder Zugfahrzeug 14, dem Steuerungsserver 16 und/oder dem Benutzerendgerät 18.

Die Steuereinheit 30 ist zudem mit dem Getriebe 28 verbunden, beispielsweise als Teil der Getriebesteuerung ausgeführt. Die Steuereinheit 30 ist dazu eingerichtet, das Getriebe 28 anzusteuern. Zudem kann die Steuereinheit 30 auch das Übersetzungsverhältnis des Getriebes 28 regeln.

Im Folgenden wird vereinfacht davon gesprochen, dass das Übersetzungsverhältnis des Getriebes 28 gesteuert wird, wobei hier auch stets ein Regeln des Übersetzungsverhältnisses auf eine bestimmte, vorgegebene Ausgangsdrehzahl verstanden wird.

Während des Betriebs des Futtermischwagens 12 steuert die Steuereinheit 30 das Übersetzungsverhältnis des Getriebes 28 derart, dass die Ausgangsdrehzahl am Getriebe 28 einer ausgewählten Zieldrehzahl entspricht.

Die Zieldrehzahl kann sowohl ein konstanter Wert für eine Ausgangsdrehzahl des Getriebes 28 sein oder aber auch ein Verlauf einer Ausgangsdrehzahl, beispielsweise ein zeitlicher Verlauf, bei dem die Ausgangsdrehzahl in Abhängigkeit einer verstrichenen Zeit veränderlich ist.

Denkbar ist auch ein Verlauf der Ausgangsdrehzahl, der anhand von weiteren Sensordaten angepasst wird, beispielsweise anhand des Gewichtes der bereits in den Futterbehälter eingefüllten Futterkomponenten. In anderen Worten ist der Wert der Ausgangsdrehzahl in diesen Fällen variabel, sodass das Übersetzungsverhältnis entsprechend variabel angepasst wird.

Der Futtermischwagen 12 im gezeigten Ausführungsbeispiel hat auch ein Eingabemittel 32, beispielsweise einen berührungsempfindlichen Bildschirm, Bedienungsknöpfe oder dergleichen, das mit der Steuereinheit 30 in Verbindung steht.

Der Futtermischwagen 12 kann zudem einen GNSS-Empfänger 34, eine Wiegevorrichtung 36, einen Füllstandssensor 38 zur Bestimmung der Füllstandhöhe des Futters im Futterbehälter 24, einen Mischungssensor 40 innerhalb des Futterbehälters 24 sowie einen Getriebeöltemperatursensor 42 aufweisen.

Der GNSS-Empfänger 34, die Wiegevorrichtung 36, der Füllstandssensor 38, der Mischungssensor 40 und/oder der Getriebeöltemperatursensor 42 sind zur Datenübertragung mit der Steuereinheit 30 verbunden und übermitteln die von Ihnen genommenen Messwerte an die Steuereinheit 30.

Die Steuerung der Ausgangsdrehzahl erfolgt anhand der Futterkomponente, die aktuell in den Futterbehälter 24 eingefüllt wird bzw. anhand der Erkenntnis, dass ein Austragsvorgang durchgeführt wird, d. h. das Futtermittel aus dem Futterbehälter 24 ausgebracht wird.

Hierzu können in der Steuereinheit 30 bestimmte Zieldrehzahlen oder Mischdrehzahlen hinterlegt sein, insbesondere für einen Austragsvorgang, der manuell aktiviert wurde unabhängig von einem Rezept.

Ähnlich wie die Zieldrehzahl beschreibt die Mischdrehzahlen eine konstante Drehzahl des Mischwerkzeugs 26, die erreicht werden soll, bzw. einen Verlauf einer variablen Drehzahl des Mischwerkzeugs 26.

In der Steuereinheit 30 können auch Umrechnungswerte, wie Umrechnungsformel oder Umrechnungstabellen, hinterlegt sein, die eine Umrechnung zwischen einer angegebenen Mischdrehzahl und der Zieldrehzahl und/oder dem Übersetzungsverhältnis durch die Steuereinheit 30 ermöglichen.

Ebenfalls können in der Steuereinheit 30 Daten vorhanden sein, die die Zuordnung der Mischdrehzahl bzw. einer Zieldrehzahl zu verschiedenen Futterkomponenten unabhängig von einem Rezept ermöglichen.

Informationen zur zu verwendenden Zieldrehzahl werden bevorzugt durch Rezepte bereitgestellt.

Ein Rezept umfasst dabei Angaben zu einer Futterration, die im Futtermischwagen 12 zubereitet werden soll, genauer gesagt die hierzu verwendeten einzelnen Futterkomponenten und die Menge, üblicherweise als Trockenmasse, der einzelnen Futterkomponenten.

Zudem umfasst das Rezept für eine, mehrere oder alle Futterkomponenten, die im Rezept enthalten sind, eine Zieldrehzahl und/oder eine Mischdrehzahl für die entsprechende Futterkomponente. Die Mischdrehzahl bzw. die Zieldrehzahl gibt die Drehzahl des Mischwerkzeugs 26 bzw. den korrespondierenden Wert der Ausgangsdrehzahl an, mit der das Mischwerkzeug 26 optimalerweise rotieren soll, während die jeweilige Futterkomponente in den Futterbehälter 24 eingefüllt wird.

Die jeweils optimale Mischdrehzahl bzw. Zieldrehzahl hängt von der Futterkomponente ab und kann auch von den bereits zuvor geladenen Futterkomponenten abhängen.

Ein Rezept kann auch einen vorbestimmten Ablauf enthalten, der die Reihenfolge bestimmt, in der die Futterkomponenten hintereinander in den Futterbehälter 24 einzufüllen sind. Zudem ist zu einer, mehreren oder allen Futterkomponenten eine Zieldrehzahl bzw. Mischdrehzahl hinterlegt.

Ebenfalls kann ein Rezept einen Weitermischlauf aufweisen, dem auch eine Zieldrehzahl und/oder Mischdrehzahl zugeordnet ist, die verwendet werden soll, wenn die letzte Futterkomponente in den Futterbehälter 24 eingefüllt wurde.

Der Weitermischlauf kann auch eine Angabe einer definierten Zeitdauer enthalten, für die das Mischwerkzeug 26 weiter betrieben werden soll nachdem die letzte Futterkomponente in den Futterbehälter 24 eingefüllt wurde. Nach Ablauf der definierten Zeitdauer wird das Mischwerkzeug 26 selbstständig gestoppt.

Ebenfalls kann ein Rezept eine Zieldrehzahl und/oder eine Mischdrehzahl für einen bestimmten Austragsvorgang der im Futterbehälter 24 vermischten Futterkomponenten enthalten. Das Rezept kann somit auch als Entladeprogramm dienen.

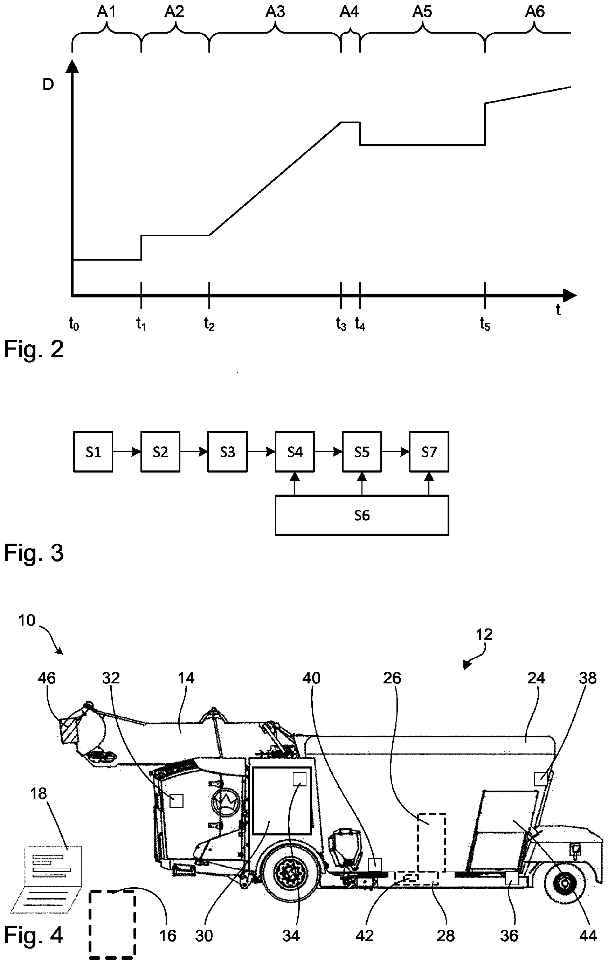

In Figur 2 ist ein Rezept mittels eines Diagramms veranschaulicht, in dem die Drehzahl des Mischers D gegenüber der Zeit aufgetragen ist.

Das Rezept umfasst sechs Abschnitte A1, A2, A3, A4, A5 und A6. Im Diagramm sind diese zu den Zeitpunkten t1, t2, t3, t4 bzw. t5 beendet und der daran anschließende Abschnitt beginnt.

Die Zeitpunkte sind nicht durch das Rezept vorgegeben. Vielmehr sind diese Zeitpunkte abhängig von der Füllgeschwindigkeit können sich damit von Durchlauf zu Durchlauf des Rezepts unterscheiden. Denkbar ist jedoch auch, dass das Rezept diese Zeitpunkte vorgibt.

In den ersten vier Abschnitten A1, A2, A3 und A4 werden verschiedene Futterkomponenten in den Futterbehälter 24 geladen, im fünften Abschnitt A5 erfolgt ein Weitermischlauf und ab t5 beginnt der sechste Abschnitt A6, nämlich der Austragsvorgang.

Zunächst soll im ersten Abschnitt A1 eine erste Futterkomponente, beispielsweise Heu zugefügt werden. Im Beispiel gemäß Figur 2 ist für Heu eine konstante und recht niedrige Drehzahl des Mischwerkzeugs 26 als Mischdrehzahl zugeordnet und im Rezept hinterlegt.

Die zweite Futterkomponente, die im zweiten Abschnitt A2 geladen werden soll, ist beispielsweise ein Kraftfutter. Für Kraftfutter ist eine zweite konstante Drehzahl des Mischwerkzeugs 26 als Mischdrehzahl zugeordnet und im Rezept hinterlegt.

Als dritte Futterkomponente soll in diesem Rezept in Abschnitt A3 Maissilage in den Futterbehälter 24 gefüllt werden. Die zur Maissilage hinterlegte Mischdrehzahl ist kein konstanter Wert einer Drehzahl des Mischwerkzeug 26 wie in den Abschnitten A1 und A2, sondern eine Kennlinie. Im gezeigten Beispiel steigt die Drehzahl des Mischwerkzeug 26 linear über die Zeit an, was als zeitlicher Verlauf einer variablen Drehzahl des Mischwerkzeugs 26 als Mischdrehzahl im Rezept hinterlegt ist.

Denkbar sind ebenfalls andere Abhängigkeiten, wie ein linear steigender Verlauf der Drehzahl in Abhängigkeit des bereits eingefüllten Gewichtes an Maissilage.

Auch nichtlineare und nicht-stetig steigende Kennlinien sind denkbar, beispielsweise oszillierende Kennlinien oder Änderungen nach Zeitintervallen.

Als vierte Futterkomponente soll im Figur 2 gezeigten Rezept in Abschnitt A4 ein Futterergänzungsmittel in kleiner Menge zugeführt werden. Die hierzu zugeordnete Drehzahl des Mischwerkzeug 26 ist ebenfalls konstant und entspricht der höchsten im dritten Abschnitt A3 erreichten Drehzahl. Diese Drehzahl ist als Mischdrehzahl im Rezept hinterlegt.

Das in Figur 2 veranschaulicht Rezept sieht als Weitermischlauf im fünften Abschnitt A5 eine gegenüber dem vierten Abschnitt A4 reduzierte, jedoch konstante Drehzahl des Mischwerkzeug 26 vor. Diese ist als Mischdrehzahl für den Weitermischlauf im Rezept hinterlegt.

Zum Austragen der schließlich im Futterbehälter vermischten Futterkomponenten sieht das Rezept in Abschnitt A6 eine deutlich höhere Drehzahl des Mischwerkzeugs 26 als Startwert vor, der im zeitlichen Verlauf zudem ansteigt. Der entsprechende zeitliche Verlauf ist als Mischdrehzahl im Rezept für den Austragsvorgang hinterlegt.

Denkbar ist hier, dass die Drehzahl des Mischwerkzeugs 26 einen zum Gewicht antiproportionalen Verlauf hat.

Im Rezept können zudem weitere Abhängigkeiten der Drehzahl des Mischwerkzeugs 26, der Ausgangsdrehzahl oder des Übersetzungsverhältnisses von Messwerten hinterlegt sein. Beispielsweise kann die Drehzahl des Mischwerkzeugs 26 abhängig sein von der Trockenmasse der Futterkomponente, der mittels des Mischungssensors 40 ermittelten Homogenität der Mischung im Futterbehälter 24, der vom Füllstandssensor 38 ermitteln Füllstandhöhe im Futterbehälter 24, von der mittels des Getriebeöltemperatursensors 42 ermittelten Getriebeöltemperatur des Getriebes 28 und/oder von den Betriebsdaten des Füll- und/oder Zugfahrzeugs 14, insbesondere der Motordrehzahl des Zugfahrzeugs 14.

Ein solches Rezept kann durch den Benutzer mittels des Eingabemittels 32 erstellt werden.

Ebenfalls kann ein solches Rezept am Benutzerendgerät 18 erstellt und an die Steuereinheit 30 mittels der Kommunikationsverbindung übertragen werden.

Denkbar ist auch, dass verschiedene Rezepte auf dem Steuerungsserver 16 hinterlegt sind, die beispielsweise von Futtermittelherstellern, dem Hersteller des Futtermischwagens 12, weiteren Unternehmen oder anderen Personen bereitgestellt wurden.

Der Steuerungsserver 16 ist beispielsweise ein über das Internet erreichbarer Server von dem die Steuereinheit 30 ein Rezept erhält.

In Figur 3 ist ein Ablaufdiagramm eines erfindungsgemäßen Verfahrens dargestellt, das zum Betrieb des Futtermischwagens 12 durchgeführt wird und zur Steuerung des Getriebes 28 dient.

In einem vorbereitenden Schritt S1 wird, wie zuvor beschrieben, ein Rezept erstellt.

Das Rezept wird dann in Schritt S2 an den Futtermischwagen 12, genauer gesagt die Steuereinheit 30 übertragen und somit von der Steuereinheit 30 erhalten.

Nun beginnt der Beladevorgang und der Futtermischwagen 12 wird mit den verschiedenen Futterkomponenten beladen.

Die Steuereinheit 30 ermittelt nun in Schritt S3, welche Futterkomponente aktuell in den Futterbehälter 24 geladen wird.

Dies kann beispielsweise mittels der Daten des GNSS-Empfängers 34 erfolgen, wenn der Futtermischwagen 12 zum Beladen mit den verschiedenen Futterkomponenten an verschiedenen Orten, beispielsweise zu verschiedenen Silos bewegt wird.

Denkbar ist auch, dass der Benutzer am Eingabemittel 32 eingibt, welche Futterkomponente er nun in den Futtermischwagen 12 einfüllt bzw. eingibt, dass nun die nächste Futterkomponente in den Futtermischwagen 12 eingefüllt wird.

Ebenfalls kann die Steuereinheit 30 mittels der Messwerte der Wiegevorrichtung 36 erkennen, welche Futterkomponente aktuellen in den Futterbehälter 24 eingefüllt wird.

Hierbei nimmt die Steuereinheit 30 zum Beispiel an, dass der Füllvorgang bei Erreichen des im Rezept hinterlegten Gewichtes für eine bestimmte Futterkomponente (bzw. kumulierten Gewichtes aller bisher eingefüllten Futterkomponenten) mit dieser Futterkomponente abgeschlossen ist und anschließend die nächste im Rezept vorgesehene Futterkomponente eingefüllt wird bzw. das Befüllen beendet ist.

Ist beispielsweise für die erste Komponente eine Menge von 300 kg im Rezept vorgesehen, und für die zweite Komponente ein Gewicht von 600 kg, so bestimmte die Steuereinheit das aktuell die erste Futterkomponente in den Futterbehälter 24 eingefüllt wird, solange das mittels der Wiegevorrichtung 36 ermittelte Gewicht aller eingefüllten Futterkomponenten zwischen 0 und 300 kg liegt. Liegt das Gewicht des Futters im Futterbehälter 24 zwischen 300 und 900 kg, bestimmt die Steuereinheit 30, dass derzeit die zweite Futterkomponente in den Futterbehälter 24 eingefüllt wird.

Im nächsten Schritt S4 wählt die Steuereinheit 30 nun die Zieldrehzahl aus. Im einfachsten Fall entspricht die Zieldrehzahl derjenigen Zieldrehzahl, die für die in Schritt S3 ermittelte Futterkomponente im Rezept hinterlegt ist.

Ist im Rezept eine Mischdrehzahl hinterlegt, so kann die Steuereinheit 30 die Mischdrehzahl in eine Zieldrehzahl umrechnen.

Sobald die Zieldrehzahl in Schritt S4 ausgewählt ist, steuert die Steuereinheit 30 in Schritt S5 das Übersetzungsverhältnis des Getriebes 28, damit die Ausgangsdrehzahl des Getriebes 28 der Zieldrehzahl entspricht und sich das Mischwerkzeug 26 mit der optimalen Drehzahl dreht.

Sofern es sich bei der Zieldrehzahl um einen Verlauf handelt, wird auch das Übersetzungsverhältnis entsprechend gesteuert, sodass die Ausgangsdrehzahl dem Verlauf der Zieldrehzahl entspricht.

Optional kann ein Schritt S6 durchgeführt werden - bereits zur Auswahl der Zieldrehzahl (Schritt S4) oder bei der Steuerung des Übersetzungsverhältnisses (Schritt S5) - in dem die Zieldrehzahl bzw. die Ausgangsdrehzahl auch ausgewählt wird anhand von bestimmten vorgegebenen Zeitintervallen, vom Standort des Fahrzeugs (ermittelt mittels des GNSS-Empfänger 34), von der Trockenmasse der Futterkomponente (Hinterlegt im Rezept oder der Steuereinheit 30), von der Homogenität der Mischung der im Futterbehälter 24 befindlichen Futterkomponenten (gemessen mittels des Mischungssensors 40), von der Füllstandhöhe im Futterbehälter 24 (ermittelt mittels des Füllstandssensors 38), von der Getriebeöltemperatur des Getriebes 28 und/oder von Betriebsdaten des Zugfahrzeugs 14. Anhand dieser Werte kann die Steuereinheit 30 die Zieldrehzahl bzw. die Ausgangsdrehzahl anpassen oder korrigieren.

Denkbar ist auch, dass die Steuereinheit 30 Einfluss auf Betriebsdaten des Zugfahrzeugs 14 nimmt, beispielsweise mittels der TIM Schnittstelle. Dies kann hilfreich sein, wenn nicht genügend Drehmoment zur Verfügung steht oder beim Austragen die Fahrgeschwindigkeit verringert werden soll.

Zudem kann die Steuereinheit 30 jederzeit auf in der Steuereinheit 30 hinterlegte Daten zurückgreifen, falls im Rezept Werte fehlen oder Umrechnungen vorzunehmen sind.

Auf diese Weise wird das entsprechende Rezept abgearbeitet und der Futterbehälter 24 mit den entsprechenden Futterkomponenten befüllt.

In dem in Figur 2 gezeigten Beispiel wird folglich das Übersetzungsverhältnis des Getriebes 28 durch die Steuereinheit 30 so gesteuert bzw. geregelt, dass die Drehzahl des Mischwerkzeugs 26 den in Figur 2 gezeigten Verlauf hat. Beispielsweise wird nach Zeitpunkt t4, wenn der Futterbehälter 24 wie vorgesehen gefüllt ist, der Futtermischwagen 12 während der Weitermischlauf zum Stall gefahren. Zum Zeitpunkt t5 wird dann, beispielsweise manuell durch den Benutzer oder mithilfe des Standorts, der Austragsvorgang gestartet.

Die Steuereinheit 30 erkennt in Schritt S7, dass der Austragsvorgang gestartet wurde und wählt die Zieldrehzahl entsprechend anhand des Rezeptes oder aufgrund von der Steuereinheit 30 hinterlegten Daten aus.

Gleichzeitig kann die Steuereinheit 30 eine Entladeklapp 44 des Futterbehälters 24 öffnen.

Die Zieldrehzahl bzw. die Ausgangsdrehzahl während des Austragsvorgangs kann ebenfalls anhand der in Schritt S6 ermittelten Daten angepasst werden.

Insbesondere kann beim Austragsvorgang das Gewicht des im Futterbehälter 24 noch befindlichen Futters verwendet werden, um die Zieldrehzahl bzw. das Übersetzungsverhältnis anzupassen.

Auf diese Weise wird eine sehr gute Durchmischung der einzelnen Futterkomponenten bzw. ein guter Austrag des gemischten Futters erreicht, ohne dass während der Benutzung des Futtermischwagens 12 aufwändige Einstellungen durch den Benutzer vorgenommen, angepasst oder überwacht werden müssten. Gleiches gilt für den Austragsvorgang. Gleichzeitig wird sichergestellt, dass das Futter optimal gemischt wird, da die Drehzahl des Mischwerkzeugs 26 auf die einzelnen Futterkomponenten angepasst ist.

In Figur 4 ist eine zweite Ausführungsform eines erfindungsgemäßen Systems 10 mit einer zweiten Ausführungsform eines Futtermischwagens 12 dargestellt. Die zweite Ausführungsform entspricht im Wesentlichen der ersten Ausführungsform, sodass im Folgenden lediglich auf die Unterschiede eingegangen wird. Gleiche und funktionsgleiche Teile sind daher mit denselben Bezugszeichen versehen.

Der Futtermischwagen 12 gemäß der zweiten Ausführungsform ist ein selbstfahrender Futtermischwagen, der im Gegensatz zum Futtermischwagen 12 der ersten Ausführungsform einen eigenen Antrieb hat.

Zudem weist der Futtermischwagen 12 der zweiten Ausführungsform ein eigenes Aufnahmewerkzeug 46 auf, welches im gezeigten Ausführungsbeispiel eine Entnahmefräse ist.

## Patentansprüche

1. Verfahren zur Steuerung eines Getriebes (28) eines Futtermischwagens (12), wobei der Futtermischwagen (12) das Getriebe (28), einen Futterbehälter (24), wenigstens ein im Futterbehälter (24) angeordnetes Mischwerkzeug (26) und eine Steuereinheit (30) aufweist, wobei das Verfahren die folgenden Schritte umfasst:
- Bestimmen der aktuell in den Futterbehälter (24) geladenen Futterkomponente durch die Steuereinheit (30) oder Erkennen eines aktuell durchgeführten Austragsvorgangs,
- Auswählen der Zieldrehzahl des Getriebes (28) anhand der in den Futterbehälter (24) geladenen Komponenten oder anhand der Durchführung des Austragsvorgangs durch die Steuereinheit (30), und
- Steuern des Übersetzungsverhältnisses des Getriebes (28), sodass die Ausgangsdrehzahl der ausgewählten Zieldrehzahl entspricht.

2. Verfahren nach Anspruch 1, **dadurch gekennzeichnet, dass** die Steuereinheit (30) ein Rezept erhält, wobei in dem Rezept die in den Futterbehälter (24) zu ladenden Futterkomponenten und/oder Informationen zum Austragsvorgang vorgegeben sind.

3. Verfahren nach Anspruch 2, **dadurch gekennzeichnet, dass** das Rezept eine oder mehrere der folgenden Angaben umfasst:
- eine Zieldrehzahl und/oder eine Mischdrehzahl des wenigstens einen Mischwerkzeugs (26) für eine zu ladende Futterkomponente,
- eine Zieldrehzahl und/oder eine Mischdrehzahl für den Austragsvorgang zum Austragen der im Futterbehälter (24) vermischten Futterkomponenten,
- einen vorbestimmten Ablauf hintereinander zu ladender Futterkomponenten und einen vorbestimmten Ablauf an Zieldrehzahlen und/oder Mischdrehzahlen, der mit dem vorbestimmten Ablauf hintereinander zu ladender Futterkomponenten korrespondiert, oder
- eine Zieldrehzahl und/oder eine Mischdrehzahl sowie optional eine Zeitdauer für einen Weitermischlauf.

4. Verfahren nach Anspruch 3, **dadurch gekennzeichnet, dass** die Steuereinheit (30) die Zieldrehzahl des Getriebes (28) mithilfe von in der Steuereinheit (30) hinterlegten Daten sowie anhand der im Rezept angegebenen Futterkomponente und/oder der angegebenen Mischdrehzahl auswählt.

5. Verfahren nach einem der vorhergehenden Ansprüche, **dadurch gekennzeichnet, dass** die Zieldrehzahl eine konstante Ausgangsdrehzahl oder einen Verlauf einer variablen Ausgangsdrehzahl angibt und/oder die Mischdrehzahl eine konstante Drehzahl des Mischwerkzeugs (26) oder einen Verlauf einer variablen Drehzahl des Mischwerkzeugs (26) angibt.

6. Verfahren nach einem der vorhergehenden Ansprüche, **dadurch gekennzeichnet, dass** die Steuereinheit (30) das Rezept durch eine Eingabe des Benutzers am Futtermischwagen (12) und/oder durch eine Kommunikationsverbindung von einem Füll- und/oder Zugfahrzeug (14) des Futtermischwagens (12), von einem Steuerungsserver (16) und/oder von einem Benutzerendgerät (18) erhält.

7. Verfahren nach einem der vorhergehenden Ansprüche, **dadurch gekennzeichnet, dass** die in den Futterbehälter (24) geladene Futterkomponente bestimmt oder das Durchführen eines Austragsvorgangs bestimmt wird anhand:
- des Standorts des Futtermischwagens (12),
- einer Eingabe des Benutzers an einem Eingabemittel (32) des Futtermischwagens (12),
- das Betätigen einer Aufnahmevorrichtung (46) des Futtermischwagens (12), und/oder
- des Gewichtes aller bereits in den Futterbehälter (24) eingefüllten Futterkomponenten.

8. Verfahren nach einem der vorhergehenden Ansprüche, **dadurch gekennzeichnet, dass** die Mischdrehzahl, die Zieldrehzahl und/oder die Ausgangsdrehzahl in Abhängigkeit von Zeitintervallen, vom Standort des Futtermischwagens (12), von der Trockenmasse der Futterkomponenten, von der Homogenität der Mischung der im Futterbehälter (24) befindlichen Futterkomponenten, von der Füllstandhöhe im Futterbehälter (24), von der Getriebeöltemperatur des Getriebes (28) und/oder von Betriebsdaten eines Füll- und/oder Zugfahrzeugs (14) für den Futtermischwagen (12) bestimmt wird.

9. Verfahren nach einem der vorhergehenden Ansprüche, **dadurch gekennzeichnet, dass** die Steuereinheit (30) Betriebsdaten, insbesondere die Fahrgeschwindigkeit und/oder Motordrehzahl eines Füll- und/oder Zugfahrzeugs (14) für den Futtermischwagen (12) steuert.

10. Verfahren nach einem der vorhergehenden Ansprüche, **dadurch gekennzeichnet, dass** das Getriebe (28) ein stufenloses Getriebe ist, insbesondere wobei das Getriebe (28) ein hydromechanisches Getriebe ist und/oder ein Planetengetriebe aufweist.

11. Futtermischwagen mit einen Futterbehälter (24), wenigstens einem im Futterbehälter (24) angeordneten Mischwerkzeug (26), einem Getriebe (28) zum Antrieb des Mischwerkzeugs (26) sowie einer Steuereinheit (30), wobei der Futtermischwagen (12), insbesondere die Steuereinheit (30) dazu eingerichtet ist, ein Verfahren gemäß einem der vorhergehenden Ansprüche auszuführen.

12. Futtermischwagen nach Anspruch 11, **dadurch gekennzeichnet, dass** der Futtermischwagen (12) ein Aufnahmewerkzeug (46) für Futter, insbesondere eine Entnahmefräse, ein Eingabemittel (32), einen GNSS-Empfänger (34) und/oder eine Wiegevorrichtung (36) aufweist.

13. System mit einem Futtermischwagen nach Anspruch 11 oder 12 sowie einem Füll- und/oder Zugfahrzeug (14) für den Futtermischwagen (12), einem Steuerungsserver (16) und/oder einem Benutzerendgerät (18), wobei der Futtermischwagen (12), insbesondere die Steuereinheit (30), in Kommunikationsverbindung mit dem Füll- und/oder Zugfahrzeug (14), dem Steuerungsserver (16) bzw. dem Benutzerendgerät (18) steht, und wobei das System (10) dazu eingerichtet ist, ein Verfahren gemäß einem der Ansprüche 1 bis 10 auszuführen.
